# EUROPEAN PATENT APPLICATION

(11) **EP 2 905 874 A1**
(43) Date of publication of application: **12.08.2015**
(21) Application number: 13843875.9
(22) Date of filing: 12.09.2013
(51) Int. Cl.: H02J 17/00, B60L 5/00, B60L 11/18, B60M 7/00, H01F 38/14, H02J 7/00

(54) **POWER RECEIVING APPARATUS AND NON-CONTACT POWER TRANSMISSION APPARATUS**

(30) Priority: 03.10.2012 JP 2012221259
(71) Applicant: Kabushiki Kaisha Toyota Jidoshokki, Kariya-shi, Aichi 448-8671 (JP)
(72) Inventor: MATSUKURA, Keisuke, Kariya-shi, Aichi 448-8671 (JP); KONDO, Tadashi, Kariya-shi, Aichi 448-8671 (JP); KOIKE, Tsuyoshi, Kariya-shi, Aichi 448-8671 (JP); KATSUNAGA, Hiroshi, Kariya-shi, Aichi 448-8671 (JP); TAGUCHI, Yuichi, Kariya-shi, Aichi 448-8671 (JP); TOGANO, Hiroki, Kariya-shi, Aichi 448-8671 (JP); INOUE, Keisuke, Kariya-shi, Aichi 448-8671 (JP); TSUNEKAWA, Yuki, Kariya-shi, Aichi 448-8671 (JP); ONO, Takuma, Kariya-shi, Aichi 448-8671 (JP); NAKASHIMA, Yutaka, Kariya-shi, Aichi 448-8671 (JP)
(74) Representative: TBK
(86) International application number: PCT/JP2013/074623
(87) International publication number: WO 2014/054397

(57) **Abstract**

This power receiving device is capable of receiving alternating current power in a wireless manner from a power supply device. The power receiving device includes a secondary coil, a variable load, a first impedance conversion unit, a second impedance conversion unit, a fixed load, and a switch. The secondary coil is capable of receiving the alternating current power from a primary coil. The variable load has the impedance thereof varied corresponding to the power value of power inputted thereto. Each of the first and the second impedance conversion units is provided between the secondary coil and the variable load, and has the impedance thereof configured so as to be variable. The fixed load has the same impedance irrespective of the power value of power inputted thereto. The switch receives power by means of the secondary coil, and performs switching between the fixed load, and the second impedance conversion unit and the variable load, to which the alternating current power is outputted from the first impedance conversion unit.

## Description

### TECHNICAL FIELD

The present invention relates to a power receiving device and a wireless power transfer apparatus.

### BACKGROUND ART

In the prior art, a known wireless power transfer apparatus using no power cords and no transfer cables uses, for example, magnetic field resonance. For example, patent document 1 describes a wireless power transfer apparatus that includes a power supply device having an alternating current power supply and a primary resonance coil. The resonance coil receives alternating current power from the alternating current power supply. The wireless power transfer apparatus also includes a power receiving device that includes a secondary resonance coil capable of performing magnetic field resonance with the primary resonance coil. The power supply device transfers alternating current power to the power receiving device through magnetic field resonance performed by the primary resonance coil and the secondary resonance coil. The alternating current power, which is received by the power receiving device, is used to charge a battery arranged in the power receiving device.

### PRIOR ART DOCUMENT

### PATENT DOCUMENT

Patent Document 1: Japanese Laid-Open Patent Publication No. 2009-106136

### SUMMARY OF THE INVENTION

### PROBLEMS THAT ARE TO BE SOLVED BY THE INVENTION

In such a wireless power transfer apparatus as describe above, the transfer efficiency may easily decrease, for example, when a variable load, such as a battery, is arranged and the impedance varies in accordance with the value of input power, or when the two coils are displaced.

This problem is not limited to a transfer apparatus that transfers power in a wireless manner using magnetic field resonance and also applies to a transfer apparatus that transfers power in a wireless manner using electromagnetic induction.

It is an object of the present invention to provide a power receiving device that limits decreases in the transfer efficiency and a wireless power transfer apparatus that includes the power receiving device.

### MEANS FOR SOLVING THE PROBLEM

To achieve the above object, one aspect of the present invention is a power receiving device that is capable of receiving alternating current power in a wireless manner from a power supply device including a primary coil that receives the alternating current power. The power receiving device includes a secondary coil, a variable load, a first impedance conversion unit, a second impedance conversion unit, a fixed load, and a switch. The secondary coil is capable of receiving the alternating current power from the primary coil. The variable load has impedance that varies in accordance with a value of input power. The first impedance conversion unit is arranged between the secondary coil and the variable load and configured to have a variable impedance. The second impedance conversion unit is arranged between the secondary coil and the variable load and configured to have a variable impedance. The fixed load is arranged separately from the variable load and has a fixed impedance regardless of the value of input power. The switch switches an output destination, to which the alternating current power received by the secondary coil is output from the first impedance conversion unit, to the fixed load or to the second impedance conversion unit and the variable load.

In the above configuration, when the impedance of the first impedance conversion unit is variably controlled, the output destination, to which the alternating current power received by the secondary coil is output from the first impedance conversion unit, is set to the fixed load. Thus, the impedance of the first impedance conversion unit may be variably controlled without taking into consideration variations in the impedance of the variable load. This simplifies variable control of impedance in correspondence with displacement of the coils.

Additionally, under a situation in which the impedance of the variable load may vary, the output destination, to which the alternating current power received by the secondary coil is output from the first impedance conversion unit, is set to the variable load. Thus, variations in the impedance of the variable load may be coped with by variably controlling the impedance of the second impedance conversion unit.

Thus, displacement of the coils and variations in the impedance of the variable load are both coped with, thereby limiting decreases in the transfer efficiency.

Preferably, when the impedance of the first impedance conversion unit is variably controlled, the switch switches the output destination, to which the alternating current power received by the secondary coil is output from the first impedance conversion unit, to the fixed load. After variable control of the impedance of the first impedance conversion unit is completed, the switch switches the output destination, to which the alternating current power received by the secondary coil is output from the first impedance conversion unit, to the second impedance conversion unit and the variable load.

In the above configuration, when the impedance of the first impedance conversion unit is variably controlled, the output destination, to which the alternating current power is output from the first impedance conversion unit, is the fixed load. Thus, the impedance of the first impedance conversion unit may be variably controlled without taking into consideration variations in the impedance of the variable load. After the first impedance conversion unit is variably controlled, the output destination, to which the alternating current power is output from the first impedance conversion unit, is set to the second impedance conversion unit and the variable load. Thus, the impedance of the second impedance conversion unit may be variably controlled if the impedance of the variable load varies, thereby decreasing the need to variably control the impedance of the first impedance conversion unit. This appropriately copes with displacement of the coils and variations in the impedance of the variable load.

It is preferable to provide a wireless power transfer apparatus that includes the power receiving device and a power supply device that includes an alternating current power supply, which is capable of outputting alternating current power, and the primary coil, which receives the alternating current power.

In the above configuration, the wireless power transfer apparatus appropriately copes with displacement of the coils and variations in the impedance of the variable load.

It is preferable to further provide a power supply control unit. The alternating current power supply is capable of outputting large alternating current power and small alternating current power, the values of which are relatively large and small, respectively. When the impedance of the first impedance conversion unit is variably controlled, the power supply control unit controls the alternating current power supply so that the alternating current power supply outputs the small alternating current power. After variable control of the impedance of the first impedance conversion unit is completed, the power supply control unit controls the alternating current power supply so that the alternating current power supply outputs the large alternating current power.

In the above configuration, the small alternating current power is output while the impedance of the first impedance conversion unit is variably controlled. This decreases power loss during variable control of the impedance of the first impedance conversion unit. Thus, the impedance of the first impedance conversion unit may be variably controlled with low power consumption.

It is preferable to further provide a variable control unit. The power supply device includes a third impedance conversion unit. The third impedance conversion unit is configured to have a variable impedance and arranged between the alternating current power supply and the primary coil. When the output destination, to which the alternating current power received by the secondary coil is output from the first impedance conversion unit, is set to the fixed load, the variable control unit variably controls the impedance of the first impedance conversion unit and the impedance of the third impedance conversion unit.

In the above configuration, under a situation in which the output destination, to which the alternating current power received by the secondary coil is output from the first impedance conversion unit, is the fixed load, variable control is performed on the impedance of the first impedance conversion unit and the impedance of the third impedance conversion unit. Thus, variable control may be performed on the impedances of the two impedance conversion units without taking into consideration variations in the impedance of the variable load. This simplifies variable control of the impedances of the two impedance conversion units.

### BRIEF DESCRIPTION OF THE DRAWINGS

Fig. 1 is a circuit diagram of one embodiment of a wireless power transfer apparatus according to the present invention.
Figs. 2A and 2B are conceptual diagrams each illustrating the relative position of a power transmitter and a power receiver of Fig. 1.
Fig. 3 is a circuit diagram of one example of a wireless power transfer apparatus.

### EMBODIMENTS OF THE INVENTION

A wireless power transfer apparatus (wireless power transfer system) according to the present invention will now be described.

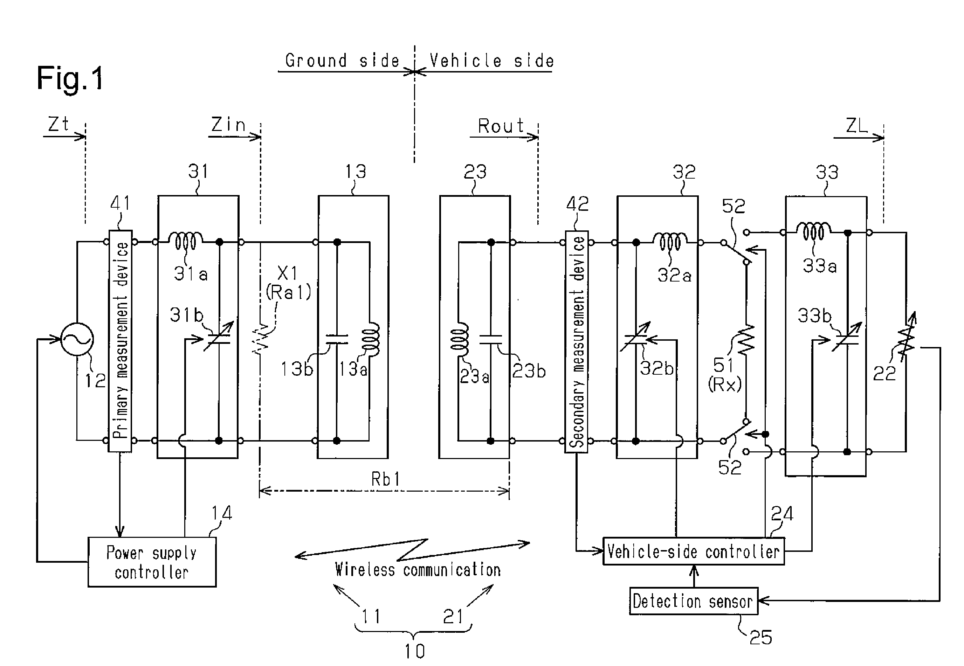

As shown in Fig. 1, a wireless power transfer apparatus 10 includes a ground-side device 11 located on the ground and a vehicle-side device 21 installed in a vehicle. The ground-side device 11 corresponds to a power supply device (primary device). The vehicle-side device 21 corresponds to a power receiving device (secondary device).

The ground-side device 11 includes a high frequency power supply 12 (alternating current power supply), which is capable of outputting high frequency power (alternating current power) of a predetermined frequency. The high frequency power supply 12 is configured to be capable of converting power, which is received from the system power, to high frequency power and outputting the converted high frequency power.

High frequency power output from the high frequency power supply 12 is transferred in a wireless manner to the vehicle-side device 21 and input to a load 22 arranged in the vehicle-side device 21. More specifically, the wireless power transfer apparatus 10 includes a power transmitter 13 (primary resonance circuit) arranged in the ground-side device 11 and a power receiver 23 (secondary resonance circuit) arranged in the vehicle-side device 21, which function to transfer power between the ground-side device 11 and the vehicle-side device 21.

The power transmitter 13 and the power receiver 23, which have the same structure, are configured to be capable of performing magnetic field resonance. More specifically, the power transmitter 13 includes a resonance circuit formed by a primary coil 13a and a primary capacitor 13b, which are connected in parallel. The power receiver 23 includes a resonance circuit formed by a secondary coil 23a and a secondary capacitor 23b, which are connected in parallel. The power transmitter 13 and the power receiver 23 are set to have the same resonance frequency.

In this configuration, when the power transmitter 13 (primary coil 13a) receives high frequency power from the high frequency power supply 12, the power transmitter 13 and the power receiver 23 (secondary coil 23a) perform magnetic field resonance. Consequently, the power receiver 23 receives some of the energy from the power transmitter 13. That is, the power receiver 23 receives high frequency power from the power transmitter 13.

When the power receiver 23 receives high frequency power, the high frequency power is input to the load 22. The load 22 incudes a rectifier (rectifying unit) and a vehicle battery (power storage device). The rectifier, which rectifies high frequency power to direct current power, includes a semiconductor element (diode) that is driven when a predetermined threshold voltage is applied. The rectified direct current power is input to the vehicle battery. The high frequency power received by the power receiver 23 is used to charge the vehicle battery.

The ground-side device 11 includes a power supply controller 14, which controls the ground-side device 11 including the high frequency power supply 12. Additionally, the vehicle-side device 21 includes a vehicle-side controller 24, which is capable of performing wireless communication with the power supply controller 14. The wireless power transfer apparatus 10, for example, starts and stops transferring power in accordance with information exchanged between the controllers 14, 24. The controllers 14, 24 each correspond to a "variable control unit". The power supply controller 14 corresponds to a "power supply control unit".

The vehicle-side device 21 includes a detection sensor 25 that detects the state of charge of the vehicle battery. The detection sensor 25 transmits detection results to the vehicle-side controller 24. This allows the vehicle-side controller 24 to acknowledge the state of charge of the vehicle battery.

The wireless power transfer apparatus 10 includes a plurality of impedance converters 31 to 33. Namely, the wireless power transfer apparatus 10 includes a first impedance converter 31, a second impedance converter 32, and a third impedance converter 33. The first impedance converter 31 serves as a third impedance conversion unit arranged in the ground-side device 11 between the high frequency power supply 12 and the power transmitter 13. The second impedance converter 32 and the third impedance converter 33 are arranged in the vehicle-side device 21 between the power receiver 23 and the load 22. The second impedance converter 32 corresponds to a "first impedance conversion unit". The third impedance converter 33 corresponds to a "second impedance conversion unit". The second impedance converter 32 is connected to the power receiver 23. The third impedance converter 33 is connected to the load 22.

The first impedance converter 31 includes a reversed-L-type LC circuit formed by a first inductor 31 a and a first capacitor 31 b. The second impedance converter 32 includes an L-type LC circuit formed by a second inductor 32a and a second capacitor 32b. The third impedance converter 33 includes a reversed-L-type LC circuit formed by a third inductor 33a and a third capacitor 33b.

The inventors have found that the real part of impedance from an output terminal of the power receiver 23 (secondary coil 23a) to the load 22 contributes to transfer efficiency between the power transmitter 13 and the power receiver 23. More specifically, the inventors have found that the real part of the impedance from the output terminal of the power receiver 23 to the load 22 includes a specific resistance Rout that increases the transfer efficiency to be relatively higher than other resistances. In other words, the inventors have found that the real part of the impedance from the output terminal of the power receiver 23 to the load 22 includes the specific resistance Rout (second resistance) that increases the transfer efficiency to be higher than a predetermined resistance (first resistance).

More specifically, if a virtual load X1 were to be arranged at an input terminal of the power transmitter 13, the specific resistance Rout would be √(Ra1xRb1), where the resistance of the virtual load X1 is represented by Ra1, and the resistance from the power receiver 23 (more specifically, output terminal of the power receiver 23) to the virtual load X1 is represented by Rb1.

Based on the above findings, the second impedance converter 32 and the third impedance converter 33 impedance-convert the impedance ZL of the load 22 so that the impedance from the output terminal of the power receiver 23 to the load 22 (impedance of the input terminal of the second impedance converter 32) approaches (preferably, equals to) the specific resistance Rout.

The value of high frequency power output from the high frequency power supply 12 is dependent on impedance from an output terminal of the high frequency power supply 12 to the load 22, that is, impedance of an input terminal of the first impedance converter 31.

In this configuration, under a situation in which the impedance from the output terminal of the power receiver 23 to the load 22 is close to the specific resistance Rout, the first impedance converter 31 impedance-converts impedance Zin from the input terminal of the power transmitter 13 to the load 22 so that the high frequency power supply 12 outputs high frequency power of a desired value. For example, the high frequency power supply 12 may output power having a value that is needed for direct current power, which is input to the vehicle battery of the load 22, to have a value that is suitable for charging. The power output from the high frequency power supply 12 and having such a value is referred to as high frequency power of the value suitable for charging. Then, impedance from the output terminal of the high frequency power supply 12 to the load 22 (impedance of the input terminal of the first impedance converter 31) that allows the high frequency power supply 12 to output the high frequency power of the value suited for charging is referred to as a input impedance suited for charging Zt. In this case, the first impedance converter 31 impedance-converts the impedance Zin from the input terminal of the power transmitter 13 to the load 22 so that the impedance from the output terminal of the high frequency power supply 12 to the load 22 becomes the input impedance suited for charging Zt. The input impedance suited for charging Zt corresponds to "predetermined impedance".

The specific resistance Rout is determined by the configurations of the power transmitter 13 and the power receiver 23 (shapes and inductances of the coils 13a, 23a, capacitances of the capacitors 13b, 23b, and the like) and the relative position of the power transmitter 13 and the power receiver 23. Thus, the specific resistance Rout varies when the power transmitter 13 and the power receiver 23 are displaced from a predetermined reference position, that is, when the relative position of the power transmitter 13 and the power receiver 23 varies.

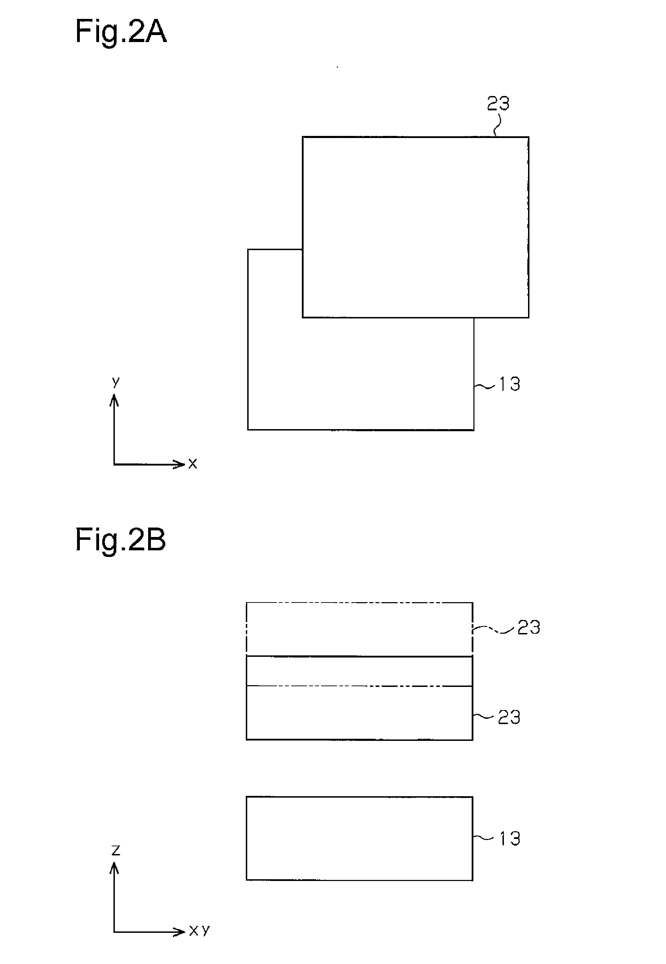

Examples of variations in the relative position of the power transmitter 13 and the power receiver 23 are shown in Figs. 2A and 2B. In Fig. 2A, the power transmitter 13 and the power receiver 23 are displaced from a reference position that is defined by a position where the entire power transmitter 13 is opposed to the entire power receiver 23. In Fig. 2B, the distance between the power transmitter 13 and the power receiver 23 may vary in accordance with how the vehicle-side device 21 is installed in a vehicle, variations in height of vehicles, and the like.

The impedance of the vehicle battery in the load 22 varies in accordance with the value of input direct current power. That is, the load 22 is a variable load 22 having the impedance ZL that varies (changes) in accordance with the value of the input power.

Such variations in the specific resistance Rout and the impedance ZL of the variable load 22 may decrease the transfer efficiency or cause failure to obtain high frequency power of the desired value. To solve this problem, the wireless power transfer apparatus 10 includes a structure that follows (copes with) variations in the relative position of the power transmitter 13 and the power receiver 23 and variations in the impedance ZL of the variable load 22. The structure will now be described.

Referring to Fig. 1, the impedance converters 31 to 33 each have a constant (impedance) including a real part (resistance) and an imaginary part (reactance), at least one of which is variable (adjustable). In the present embodiment, as shown in Fig. 1, the capacitors 31 b to 33b of the impedance converters 31 to 33 each have a variable capacitance. The constant (impedance) may also be referred to as a conversion ratio, an inductance, or a capacitance.

When the power transmitter 13 and the power receiver 23 are located at the reference position, and the high frequency power supply 12 outputs high frequency power used for charging, the constant of the second impedance converter 32 in an initial state has such a value that converts the impedance from the input terminal of the third impedance converter 33, which has the constant in an initial state, to the variable load 22 to the specific resistance Rout. Also, when the power transmitter 13 and the power receiver 23 are located at the predetermined reference position, and the high frequency power supply 12 outputs the charging high frequency power, the constant of the first impedance converter 31 in an initial state is set to a value that converts the impedance Zin from the input terminal of the power transmitter 13 to the variable load 22 to the input impedance suited for charging Zt.

A primary measurement device 41, which serves as a measurement unit, is arranged between the high frequency power supply 12 and the power transmitter 13, more specifically, between the high frequency power supply 12 and the first impedance converter 31. The primary measurement device 41, which is electrically connected to the power supply controller 14, measures a voltage waveform and a current waveform and transmits a measurement result to the power supply controller 14 in response to a request from the power supply controller 14.

A secondary measurement device 42, which serves as a measurement unit, is arranged between the power receiver 23 and the variable load 22, more specifically, between the power receiver 23 and the second impedance converter 32. The secondary measurement device 42, which is electrically connected to the vehicle-side controller 24, measures a voltage waveform and a current waveform and transmits a measurement result to the vehicle-side controller 24 in response to a request from the vehicle-side controller 24. The controllers 14, 24 variably control the constants of the impedance converters 31 to 33 based on the measurement results of the measurement devices 41, 42, respectively.

A fixed resistor (fixed load) 51 is arranged between the second impedance converter 32 and the third impedance converter 33. The fixed resistor 51 has resistance (impedance) that is constant regardless of the value of input high frequency power. The vehicle-side device 21 includes a relay 52. The relay 52 serves as a switch that switches so that a connected subject of the second impedance converter 32 switches between the fixed resistor 51 and the third impedance converter 33 connected to the variable load 22. The connected subject of the second impedance converter 32 functions as an output destination to which the high frequency power received by the power receiver 23 is output from the second impedance converter 32.

In a charging sequence in which the vehicle battery is charged, the controllers 14, 24 variably control the constants of the impedance converters 31 to 33 and control the relay 52, respectively. The charging sequence will now be described in detail. The controllers 14, 24 conduct the charging sequence while exchanging information with each other.

By exchanging information, the controllers 14, 24 check that the vehicle is located where the vehicle can be charged, more specifically, the power transmitter 13 and the power receiver 23 are located where magnetic field resonance can be performed.

Subsequently, the vehicle-side controller 24 controls the relay 52 to set the connected subject of the second impedance converter 32 to the fixed resistor 51.

The power supply controller 14 controls the high frequency power supply 12 so that the high frequency power supply 12 outputs predetermined high frequency power (small alternating current power) used for adjustments.

Subsequently, the controllers 14, 24 acknowledge the measurement results of the measurement devices 41, 42, respectively. Then, the controllers 14, 24 each determine whether or not there is a defect in the power transfer. For example, the controllers 14, 24 each determine whether or not the transfer efficiency is higher than or equal to a predetermined threshold efficiency.

When the transfer efficiency is lower than the threshold efficiency, the impedance from the output terminal of the power receiver 23 to the variable load 22 may be deviated from the specific resistance Rout. In this case, the vehicle-side controller 24 variably controls the constant of the second impedance converter 32 so that the impedance approaches the specific resistance Rout. In this case, the specific resistance Rout is determined, for example, by using various types of parameters (e.g., value of power and power factor) derived from the voltage waveform and the current waveform measured by the secondary measurement device 42.

When determining that the transfer efficiency has become equal to the threshold efficiency or higher due to the variable control performed on the constant of the second impedance converter 32, the power supply controller 14 determines whether or not the value of high frequency power output from the high frequency power supply 12 (the value of high frequency power measured by the primary measurement device 41) equals to the value of the high frequency power used for adjusting. When the value of the high frequency power output from the high frequency power supply 12 is deviated from the value of the adjusting high frequency power, the impedance from the output terminal of the high frequency power supply 12 to the variable load 22 may be deviated from the input impedance suited for charging Zt. In this case, the power supply controller 14 variably controls the constant of the first impedance converter 31 based on the measurement result of the primary measurement device 41 so that the impedance approaches the input impedance suited for charging Zt. More specifically, the constant of the first impedance converter 31 is variably controlled after the constant of the second impedance converter 32 is variably controlled.

Although the constants of the impedance converters 31, 32 are variably controlled, the transfer efficiency may be lower than the threshold efficiency or the value of power output from the high frequency power supply 12 may be deviated from the value of the adjusting high frequency power. In such a case, there may be a defect in the power transfer. Thus, the charging is terminated, and such a condition is reported.

When there is no defect in the power transfer, the power supply controller 14 controls the high frequency power supply 12 so that the high frequency power supply 12 outputs the charging high frequency power (large alternating current power) that has a larger value than the adjusting high frequency power. Additionally, the vehicle-side controller 24 controls the relay 52 to change the connected subject of the second impedance converter 32 to the third impedance converter 33.

Resistance Rx of the fixed resistor 51 and the constant of the third impedance converter 33 in the initial state are set so that the resistance (impedance) Rx of the fixed resistor 51 approaches (preferably, conforms to) the impedance from the input terminal of the third impedance converter 33 to the variable load 22 when the charging high frequency power is output. Thus, the impedance at a location downstream of the output terminal of the second impedance converter 32 may be unchanged even when the relay 52 is switched.

Subsequently, the vehicle-side controller 24 periodically acknowledges the state of charge of the vehicle battery during charging. When the state of charge of the vehicle battery reaches a trigger changing amount, the vehicle-side controller 24 notifies the power supply controller 14 of such a condition. When receiving the notification, the power supply controller 14 changes the value of the high frequency power output from the high frequency power supply 12. The change in the value of power varies the impedance ZL of the variable load 22 and deviates the impedance from the specific resistance Rout from the output terminal of the power receiver 23 to the variable load 22.

To cope with this case, the vehicle-side controller 24 variably controls the constant of the third impedance converter 33 so that the impedance from the output terminal of the power receiver 23 to the variable load 22 is constant (specified resistance Rout) regardless of the change in the value of power described above. More specifically, the vehicle-side controller 24 variably controls the constant of the third impedance converter 33 in accordance with variations in the impedance ZL of the variable load 22 so that the impedance from the input terminal of the third impedance converter 33 to the variable load 22 is constant.

Then, the vehicle-side controller 24 determines whether or not the state of charge of the vehicle battery has reached a fully charged amount (trigger stopping amount) based on the detection result of the detection sensor 25. When the state of charge of the vehicle battery reaches the fully charged state, the vehicle-side controller 24 notifies the power supply controller 14 of such a condition. When receiving the notification, the power supply controller 14 controls the high frequency power supply 12 to stop outputting high frequency power.

The operation of the present embodiment will now be described.

The second impedance converter 32 performs impedance conversion so that the impedance from the output terminal of the power receiver 23 to the variable load 22 becomes the specific resistance Rout. Thus, the transfer efficiency is improved.

The first impedance converter 31 performs impedance conversion so that the impedance from the output terminal of the high frequency power supply 12 to the variable load 22 becomes the input impedance suited for charging Zt. Thus, high frequency power having the value suitable for charging is supplied to the variable load 22.

When the constants of the impedance converters 31, 32 are variably controlled in accordance with variations in the relative position of the coils 13a, 23a (deviation from the reference position), the connected subject of the second impedance converter 32 is switched to the fixed resistor 51. Consequently, the constants of the impedance converters 31, 32 may be variable controlled without taking into consideration the variations in the impedance ZL of the variable load 22.

After the constants of the impedance converters 31, 32 are variably controlled, the relay 52 switches the connected subject of the second impedance converter 32 from the fixed resistor 51 to the third impedance converter 33. Then, the constant of the third impedance converter 33 is variably controlled when the value of high frequency power output from the high frequency power supply 12 is changed. In this case, the constant of the second impedance converter 32 is not variably controlled.

The present embodiment has the advantages described below.
(1) The vehicle-side device 21 includes the second impedance converter 32 and the third impedance converter 33, each of which has a variable constant (impedance). The second impedance converter 32 is connected to the power receiver 23. The third impedance converter 33 is connected to the variable load 22. The fixed resistor 51 is arranged separately from the variable load 22. The relay 52 is arranged so that the connected subject of the second impedance converter 32 is switched to the fixed resistor 51 or to the third impedance converter 33 and the variable load 22. When the constant of the second impedance converter 32 is variably controlled, the connected subject of the second impedance converter 32 is set to the fixed resistor 51. Thus, the constant of the second impedance converter 32 may be variably controlled without taking into consideration variations in the impedance ZL of the variable load 22. This allows variable control to be easily performed on the constant in correspondence with variations in the relative position of the coils 13a, 23a.

More specifically, if the constant of the second impedance converter 32 is variably controlled when the second impedance converter 32 is connected to the third impedance converter 33, high frequency power would vary in value when input to the input terminal of the third impedance converter 33. Thus, variable control would need to be performed on the constant of the third impedance converter 33 to correspond to variations in the impedance ZL of the variable load 22. In other words, variable control would need to be simultaneously performed on the constant of the second impedance converter 32 and the constant of the third impedance converter 33. This complicates the control. In this regard, the present embodiment includes the fixed resistor 51 having the constant resistance Rx. Thus, the constant of the second impedance converter 32 may be variably controlled without variably controlling the constant of the third impedance converter 33. This allows variable control to be easily performed on the constant in correspondence with variations in the relative position of the coils 13a, 23a.

After variable control of the constant of the second impedance converter 32 is completed, the connected subject of the second impedance converter 32 is set to the third impedance converter 33, which is connected to the variable load 22. Then, the constant of the third impedance converter 33 is variably controlled in correspondence with variations in the impedance ZL of the variable load 22. Consequently, the variations in the impedance of the variable load 22 may be followed (coped with) without variably controlling the constant of the second impedance converter 32. This appropriately follows the variations in the relative position of the coils 13a, 23a (displacement of the coils 13a, 23a) and the variations in the impedance ZL of the variable load 22.

In particular, the impedance converter that follows variations in the relative position of the coils 13a, 23a (first impedance converter 31 and second impedance converter 32) is separated from the impedance converter that follows variations in the impedance ZL of the variable load 22 (third impedance converter 33). This avoids a situation in which one of the variations cannot be followed when following the other variation. Thus, variations in the relative position of the coils 13a, 23a and variations in the impedance ZL of the variable load 22 may both be followed.
(2) When the constants of the impedance converters 31, 32 are variably controlled, the adjusting high frequency power, which has a smaller value than the charging high frequency power, is output. When variable control of the constants of the impedance converters 31, 32 is completed, the charging high frequency power is output. This decreases power loss that may occur when the constants of the impedance converters 31, 32 are each variably controlled.
(3) The variable load 22 includes a rectifier. The rectifier includes a diode that is driven when a threshold voltage is applied. In this case, if the adjusting high frequency power is output when the second impedance converter 32 and the third impedance converter 33 are connected, the rectifier (diode) would not be driven when the voltage input to the rectifier is lower than the threshold voltage. In this case, the impedance at a location downstream of the rectifier (impedance of the vehicle battery) would not be reflected. Thus, appropriate variable control cannot be performed on the constant of the second impedance converter 32. However, an increase in the value of the adjusting high frequency power is not desirable since this would increase power loss. In particular, the voltage of high frequency power input to the variable load 22 varies in accordance with the relative position of the coils 13a, 23a. Thus, if the value of the adjusting high frequency power is set so that the threshold voltage of the diode or a greater voltage is input to the variable load 22 regardless of the relative position of the coils 13a, 23a, the value of the adjusting high frequency power would increase.

In this regard, in the present embodiment, the connected subject of the second impedance converter 32 is set to the fixed resistor 51, which does not have a semiconductor element (e.g., diode), when the adjusting high frequency power is output. Thus, the above problem does not occur. This decreases the value of the adjusting high frequency power, thereby decreasing power loss resulting from the adjustment.
(4) The resistance Rx of the fixed resistor 51 and the constant of the third impedance converter 33 in the initial state are set so that the resistance Rx of the fixed resistor 51 approaches the impedance from the input terminal of the third impedance converter 33 to the variable load 22 when the charging high frequency power is output. Thus, the impedance at a location downstream of the output terminal of the second impedance converter 32 may be unchanged even when the connected subject of the second impedance converter 32 is switched from the fixed resistor 51 to the third impedance converter 33. This decreases situations in which the constants of the impedance converters 31, 32 need to be variably controlled again when the relay 52 switches, thereby simplifying the control.
(5) The inventors have found that the real part of the impedance from the output terminal of the power receiver 23 to the variable load 22 includes the specific resistance Rout that relatively increases the transfer efficiency compared to other resistances. The second impedance converter 32 performs impedance conversion so that the impedance from the output terminal of the power receiver 23 to the variable load 22 approaches the specific resistance Rout. This improves the transfer efficiency.

The constant of the second impedance converter 32 is variably controlled corresponding to the specific resistance Rout, which varies in accordance with variations in the relative position of the coils 13a, 23a. This allows high transfer efficiency to be maintained even when the relative position of the coils 13a, 23a varies.
(6) The first impedance converter 31 impedance-converts the impedance Zin from the input terminal of the power transmitter 13 to the variable load 22 when the impedance from the output terminal of the power receiver 23 to the variable load 22 is close to the specific resistance Rout. More specifically, the first impedance converter 31 performs impedance conversion so that the impedance from the output terminal of the high frequency power supply 12 to the variable load 22 becomes the input impedance suited for charging Zt. Thus, the vehicle battery may be appropriately charged.

Additionally, the power supply controller 14 variably controls the constant of the first impedance converter 31 in accordance with displacement of the coils 13a, 23a. Thus, the impedance from the output terminal of the high frequency power supply 12 to the variable load 22 may become the input impedance suited for charging Zt regardless of the displacement. More specifically, the power supply controller 14 variably controls the constant of the first impedance converter 31 so that the impedance from the output terminal of the high frequency power supply 12 to the variable load 22 approaches a constant value regardless of variations in the relative position of the coils 13a, 23a. This stabilizes the supply of power.
(7) The impedance Zin from the input terminal of the power transmitter 13 to the variable load 22 varies in accordance with the constant of the second impedance converter 32. Focusing on this point, the constant of the first impedance converter 31 is variably controlled after the constant of the second impedance converter 32 is variably controlled. This avoids unnecessary variable control.

More specifically, for example, if the constant of the second impedance converter 32 is variably controlled after the constant of the first impedance converter 31 is variably controlled, the variable control performed on the constant of the second impedance converter 32 would cause the impedance from the output terminal of the high frequency power supply 12 to the variable load 22 to be deviated from the input impedance suited for charging Zt. Consequently, variable control would need to be performed again on the constant of the first impedance converter 31.

In this regard, the present embodiment first variably controls the constant of the second impedance converter 32. This avoids the above problem, thereby simplifying the control.

The above embodiment may be modified as follows.

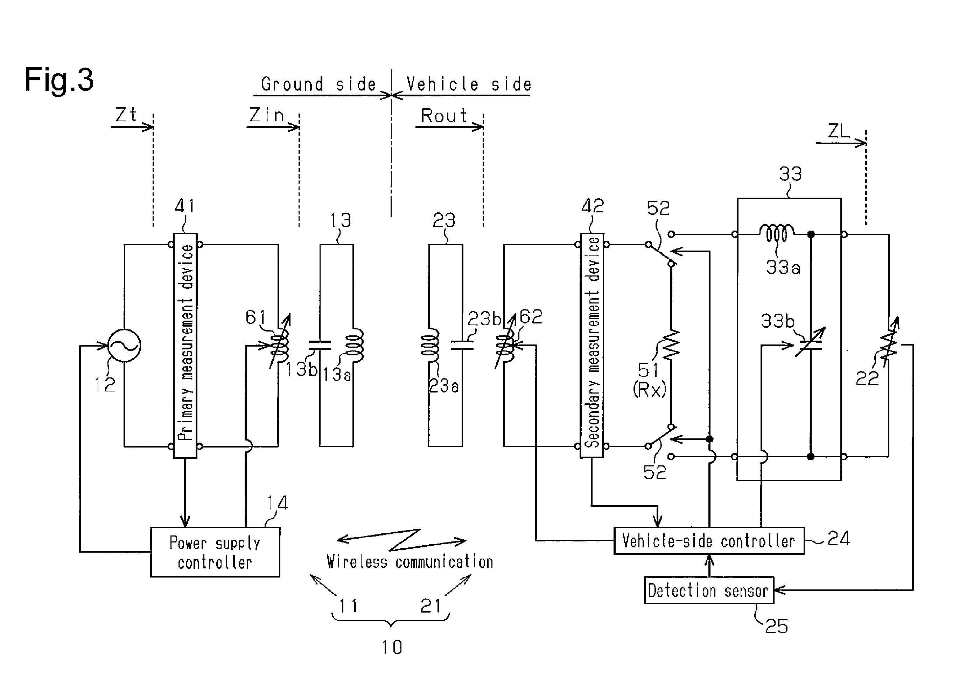

Although the impedance converters 31 to 33 are each formed by an LC circuit in the embodiment, there is no limit to such a configuration. For example, as shown in Fig. 3, the first impedance converter 31 may be replaced by a primary induction coil 61 having a variable inductance. The primary induction coil 61 cooperates with the primary coil 13a to form a transformer. Power transfer between the primary induction coil 61 and the power transmitter 13 is performed through electromagnetic induction. In this case, it is preferred that the inductance of the primary induction coil 61 be set so that the primary induction coil 61 functions as the first impedance converter 31.

In the same manner, the second impedance converter 32 may be replaced by a secondary induction coil 62 having a variable inductance arranged between the power receiver 23 and the secondary measurement device 42. The secondary induction coil 62 cooperates with the secondary coil 23a to form a transformer. Power transfer between the power receiver 23 and the secondary induction coil 62 is performed through electromagnetic induction. In this case, it is preferred that the inductance of the secondary induction coil 62 be set so that the secondary induction coil 62 operates as the second impedance converter 32.

At least one of the impedance converters 31 to 33 may be replaced by a transformer.

The first impedance converter 31 may impedance-convert the impedance Zin from the input terminal of the power transmitter 13 to the variable load 22 to improve the power factor (reactance of a predetermined impedance approaches zero).

Although the three impedance converters 31 to 33 are used in the embodiment, there is no limit to such a configuration. For example, the first impedance converter 31 may be omitted. Alternatively, the ground-side device 11 may include an impedance converter, which improves the power factor, other than the first impedance converter 31.

Although the embodiment includes the third impedance converter 33 having a variable constant, there is no limit to such a configuration. The third impedance converter 33 may have a fixed constant. In this case, it is preferred that the constant of the second impedance converter 32 be variably controlled to follow variations in the impedance ZL of the variable load 22. However, it is preferred that the third impedance converter 33 has a variable constant when focusing on the capability to appropriately follow both of variations in the relative position of the coils 13a, 23a and variations in the impedance ZL of the variable load 22. Additionally, the first impedance converter 31 may have a fixed constant.

The resistance Rx of the fixed resistor 51 may have any value. In this case, the constant of the third impedance converter 33 in the initial state may be set in correspondence with the resistance Rx of the fixed resistor 51 so that the impedance from the input terminal of the third impedance converter 33 to the variable load 22 is equal to the resistance Rx of the fixed resistor 51 when the charging high frequency power is output. Alternatively, the constant of the third impedance converter 33 may have any value. In this case, the resistance Rx of the fixed resistor 51 may be set in correspondence with the constant of the third impedance converter 33.

Although the adjusting high frequency power differs in value from the charging high frequency power in the embodiment, there is no limit to such a configuration. The adjusting high frequency power and the charging high frequency power may have the same value.

When the connected subject of the second impedance converter 32 is set to the fixed resistor 51, the high frequency power supply 12 may output the charging high frequency power. In this condition, the constants of the impedance converters 31, 32 may each be variably controlled.

The embodiment determines whether or not the high frequency power supply 12 outputs high frequency power having a value that conforms to the value of the adjusting high frequency power. Instead, it may be determined whether or not the impedance from the output terminal of the high frequency power supply 12 to the variable load 22 conforms to the input impedance suited for charging Zt (or whether the difference between the two impedances is within an allowed range).

The impedance converters 31 to 33 may each have any specific configuration without limitation to the configuration of the above embodiment. For example, a π-type or a T-type may be used.

The high frequency power supply 12 may output high frequency power having any voltage waveform, such as a pulse waveform or a sine waveform.

Although the power transmitter 13 and the power receiver 23 have the same resonance frequency in the embodiment, there is no limit to such a configuration. The power transmitter 13 and the power receiver 23 may have different resonance frequencies within a range in which power transfer can be performed.

Although the power transmitter 13 and the power receiver 23 have the same configuration in the embodiment, there is no limit to such a configuration. The power transmitter 13 and the power receiver 23 may have different configurations.

The capacitors 13b, 23b may be omitted from the embodiment. In this case, magnetic field resonance is performed using the parasitic capacitor of each of the coils 13a, 23a.

Although magnetic field resonance is used to achieve wireless power transfer in the embodiment, there is no limit to such a configuration. Electromagnetic induction may be used.

Although the wireless power transfer apparatus 10 is applied to a vehicle in the embodiment, there is no limit to such a configuration. The wireless power transfer apparatus 10 may be applied to a different device. For example, the wireless power transfer apparatus 10 may be used to charge a battery of a cell phone.

Although the variable load 22 of the embodiment includes the rectifier and the vehicle battery, there is no limit to such a configuration. The variable load 22 may include a different electronic device.

Although the vehicle-side controller 24 controls the relay 52 in the embodiment, there is no limit to such a configuration. For example, the power supply controller 14 may control the relay 52. Additionally, the component controlling the high frequency power supply 12 is not limited to the power supply controller 14 and thus may be, for example, the vehicle-side controller 24. In the same manner, any component may control each of the impedance converters 31 to 33. For example, only one of the controllers 14, 24 may control the impedance converters 31 to 33. Alternatively, a dedicated control unit other than the controllers 14, 24 may be used.

The high frequency power supply 12 may be omitted from the embodiment.

The power transmitter 13 may include a resonance circuit, which is formed by the primary coil 13a and the primary capacitor 13b, and a primary coupling coil, which is coupled to the resonance circuit through electromagnetic induction. In this case, the resonance circuit receives high frequency power from the primary coupling coil through electromagnetic induction. In the same manner, the power receiver 23 may include a resonance circuit formed by the secondary coil 23a and the secondary capacitor 23b and a secondary coupling coil that is coupled to the resonance circuit through electromagnetic induction. The secondary coupling coil may be used to extract power from the resonance circuit of the power receiver 23.

The high frequency power supply 12 may be one of an electric power source, a voltage source, and a current source.

When an electric power source is employed as the high frequency power supply 12, the impedance converters 31 to 33 may be used to match impedance. More specifically, the first impedance converter 31 impedance-converts the impedance Zin from the input terminal of the power transmitter 13 to the variable load 22 so that the impedance from the output terminal of the high frequency power supply 12 to the variable load 22 matches output impedance of the high frequency power supply 12. In this case, such impedance that matches the output impedance of the high frequency power supply 12 corresponds to "predetermined impedance".

Also, the second impedance converter 32 may impedance-convert the impedance from the input terminal of the third impedance converter 33 to the variable load 22 so that the impedance from the output terminal of the power receiver 23 to the variable load 22 matches the impedance from the output terminal of the power receiver 23 to the high frequency power supply 12.

In this configuration, the primary measurement device 41 measures reflected wave power that is directed from the power transmitter 13 to the high frequency power supply 12, and the secondary measurement device 42 measures reflected wave power that is directed from the second impedance converter 32 to the high frequency power supply 12. It is preferred that the controllers 14, 24 variably control the constants of the impedance converters 31, 32, respectively, so that each piece of the reflected wave power decreases. In this configuration, it is also preferred that variable control is simultaneously performed on the constants of the impedance converters 31, 32.

The ground-side device 11 may include two or more impedance converters. Also, the vehicle-side device 21 may include three or more impedance converters.

The third impedance converter 33 may be replaced by a DC/DC converter arranged between the rectifier and the vehicle battery and including a switching element that periodically switches. In this case, the impedance ZL of the variable load 22 is dependent on a duty ratio of activation and deactivation of the switching element. Thus, the impedance ZL of the variable load 22 may be set to be constant by adjusting the duty ratio in accordance with the value of high frequency power output from the high frequency power supply 12. In this case, the vehicle battery corresponds to the "variable load". The DC/DC converter corresponds to the "second impedance conversion unit". The adjustment of the duty ratio may be also referred to as an adjustment of the impedance of the DC/DC converter. That is, high frequency power received by the secondary coil 23a is input to the "variable load", or the high frequency power is rectified to direct current and input to the "variable load".

A DC/DC converter may be arranged in addition to the third impedance converter 33. In this case, it is preferred that the third impedance converter 33 has a fixed constant, and the duty ratio of activation and deactivation of the switching element in the DC/DC converter is adjusted.

## Claims

1. A power receiving device capable of receiving alternating current power in a wireless manner from a power supply device including a primary coil that receives the alternating current power, the power receiving device comprising:
a secondary coil capable of receiving the alternating current power from the primary coil;
a variable load having impedance that varies in accordance with a value of input power;
a first impedance conversion unit arranged between the secondary coil and the variable load and configured to have a variable impedance;
a second impedance conversion unit arranged between the secondary coil and the variable load and configured to have a variable impedance;
a fixed load arranged separately from the variable load and having a fixed impedance regardless of the value of input power; and
a switch that switches an output destination, to which the alternating current power received by the secondary coil is output from the first impedance conversion unit, to the fixed load or to the second impedance conversion unit and the variable load.

2. The power receiving device according to claim 1, wherein
when the impedance of the first impedance conversion unit is variably controlled, the switch switches the output destination, to which the alternating current power received by the secondary coil is output from the first impedance conversion unit, to the fixed load; and
after variable control of the impedance of the first impedance conversion unit is completed, the switch switches the output destination, to which the alternating current power received by the secondary coil is output from the first impedance conversion unit, to the second impedance conversion unit and the variable load.

3. The power receiving device according to claim 1 or 2, wherein
the variable load includes a rectifying unit and a vehicle battery,
the rectifying unit includes a diode and rectifies the alternating current power received by the secondary coil to direct current power, and
the vehicle battery is charged by receiving the direct current power.

4. The power receiving device according to any one of claims 1 to 3, wherein when the impedance of the variable load varies, the impedance of the second impedance conversion unit is variably controlled so that impedance from an input terminal of the second impedance conversion unit to the variable load is constant.

5. The power receiving device according to any one of claims 1 to 4, wherein
impedance from an output terminal of the secondary coil to the variable load has a real part including a specific resistance that increases transfer efficiency to be relatively higher than another resistance, and
the first impedance conversion unit performs an impedance-conversion so that the impedance from the output terminal of the secondary coil to the variable load approaches the specific resistance.

6. The power receiving device according to claim 5, wherein the specific resistance is √(Ra1×Rb1) when a virtual load having a resistance of Ra1 is arranged at an input terminal of the primary coil and resistance from the secondary coil to the virtual load is represented by Rb1.

7. A wireless power transfer apparatus comprising:
a power supply device that includes an alternating current power supply, which is capable of outputting alternating current power, and the primary coil, which receives the alternating current power; and
the power receiving device according to any one of claims 1 to 6.

8. The wireless power transfer apparatus according to claim 7, further comprising a power supply control unit, wherein
the alternating current power supply is capable of outputting large alternating current power and small alternating current power, the values of which are relatively large and small, respectively,
when the impedance of the first impedance conversion unit is variably controlled, the power supply control unit controls the alternating current power supply so that the alternating current power supply outputs the small alternating current power, and
after variable control of the impedance of the first impedance conversion unit is completed, the power supply control unit controls the alternating current power supply so that the alternating current power supply outputs the large alternating current power.

9. The wireless power transfer apparatus according to claim 7 or 8, further comprising a variable control unit, wherein
the power supply device includes a third impedance conversion unit configured to have a variable impedance,
the third impedance conversion unit is arranged between the alternating current power supply and the primary coil,
when the output destination, to which the alternating current power received by the secondary coil is output from the first impedance conversion unit, is set to the fixed load, the variable control unit variably controls the impedance of the first impedance conversion unit and the impedance of the third impedance conversion unit.

10. The wireless power transfer apparatus according to claim 9, wherein the third impedance conversion unit impedance-converts impedance from an input terminal of the primary coil to the variable load so that impedance from an output terminal of the alternating current power supply to the variable load approaches a predetermined impedance.

11. The wireless power transfer apparatus according to claim 9 or 10, wherein the variable control unit variably controls the impedance of the third impedance conversion unit after the variable control of the impedance of the first impedance conversion unit is completed.
